# EUROPÄISCHE PATENTSCHRIFT

(11) **EP 0 666 790 B1**
(45) Veröffentlichungstag und Bekanntmachung des Hinweises auf die Patenterteilung: **11.06.1997**
(21) Anmeldenummer: 93922858.1
(22) Anmeldetag: 20.10.1993
(51) Int. Cl.: B29C 43/02, B29C 43/22, B29C 57/00, B29C 55/24, B29D 23/00, F16L 47/06, B29K 23/00

(54) **VERFAHREN ZUM HERSTELLEN VON FORMTEILEN AUS IM WARMEN ZUSTAND FORMBAREN KUNSTSTOFFEN**
PROCESS FOR MANUFACTURING FORMED PARTS MADE OF HOT-FORMABLE PLASTICS
PROCEDE DE FABRICATION DE PIECES MOULEES EN MATIERES PLASTIQUES MOULABLES A L'ETAT CHAUD

(30) Priorität: 21.10.1992 AT 2081/92
(43) Veröffentlichungstag der Anmeldung: 16.08.1995
(73) Patentinhaber: SCHNALLINGER, Helfried, A-4382 Sarmingstein 46 (AT)
(72) Erfinder: SCHNALLINGER, Helfried, A-4382 Sarmingstein 46 (AT)
(74) Vertreter: Hübscher, Heiner, Dipl.-Ing.
(86) Internationale Anmeldenummer: AT9300159
(87) Internationale Veröffentlichungsnummer: WO9408772

(56) Entgegenhaltungen:
- EP-A- 0 081 451
- EP-A- 0 195 591
- WO-A-85/03251
- DE-A- 3 603 060
- PATENT ABSTRACTS OF JAPAN vol. 3, no. 32 (C-040)17. März 1979 & JP,A,54 006 079 (SEKISUI CHEM CO LTD) 17. Januar 1979 siehe Zusammenfassung
- DATABASE WPI Week 8743, Derwent Publications Ltd., London, GB; AN 87-302228 & JP,A,62 211 125 (YOSHINO KOGYOSHO KK) 17. September 1987 siehe Zusammenfassung

## Beschreibung

Die Erfindung betrifft ein Verfahren nach dem Oberbegriff des Patentanspruches 1.

Die Erfindung betrifft ferner die Anwendung des Verfahrens bei der Herstellung von Kunststoffrohren und die Anwendung des Verfahrens bei der Herstellung von Endmuffen an Kunststoffrohren.

Hier und in der Folge wird unter dem Begriff "Verformungstemperatur" jene Temperatur verstanden, die abhängig vom jeweiligen Material, der Wandstärke dieses Materials und der notwendigen Verformung eine so starke Erweichung des Materials ergibt, daß eine zerstörungsfreie und bleibende Verformung möglich wird.

Verfahren der eingangs genannten Art sind, bei ihrer Anwendung auf die Herstellung von Endmuffen an Kunststoffrohren aus der DE 22 32 479 A, der DE 27 33 643 C und der AT 318 231 beispielsweise bekannt.

Viele Kunststoffteile aus im warmen Zustand formbaren Kunststoffmaterial, die in einem Spritzguß-Extrudier-, Preß- oder sonstigem Verformungsvorgang aus dem warmen Material hergestellt wurden, neigen im Lauf der Zeit bzw. beim Überschreiten von Grenztemperaturen, die weit unter den Verformungstemperaturen liegen, zur Formveränderung, vor allem zum Schwinden, also zu einer Verringerung der Außenabmessungen gegenüber den ursprünglichen Fertigungsmaßen. Beispielsweise zeigen aus schwarzem Polyethylen hergestellte Rohre, die im Freien gelagert werden, nach einer gewissen Lagerungszeit bestimmte Schwundmaße, die in der Größenordnung von 1 oder einigen Millimetern bzw. Prozenten des Ausgangsdurchmessers liegen können. Wenn auch die üblichen Herstellungstemperaturen bzw. Verformungstemperaturen für Endmuffen im Bereich zwischen 120 bis 200° C bzw. bei reinen Verformungsvorgängen von 110° C liegen und durch die Sonneneinstrahlung bei schwarzen Rohren höchstens Temperaturen von etwa 70° C erreicht werden, treten diese Schwundvorgänge in der Praxis tatsächlich auf. Dies ist sowohl im Hinblick auf die mögliche Durchsatzmenge unerwünscht als auch für herzustellende Rohrverbindungen äußerst unangenehm, da beim Auftreten entsprechender Schwundmaße übliche Muffenverbindungen nicht mehr einwandfrei hergestellt werden können bzw. an solche Rohre angeformte Endmuffen beim Schwinden einen kleineren lichten Durchmesser annehmen als den Außendurchmesser der anzuschließenden Rohre entspricht. Übliche Herstellungstoleranzen für die Lichtweite von Endmuffen sind ± 0,5 mm. Diese Toleranzen werden bei den erwähnten Schwundvorgängen weit überschritten. Ähnliche Nachteile treten bei einer Vielzahl anderer in einem Warmformvorgang aus Polyolefinen hergestellten Kunststoffteilen, z. B. Armaturen, auf.

Um schrumpffreie Muffen zu erhalten, ist bisher der Einsatz aufwendiger Herstellungsverfahren notwendig. Nach einem dieser bekannten Verfahren werden die Muffen gesondert in einer Spritzgußmaschine hergestellt und anschließend mit Hilfe eines eigenen Gerätes an ein extrudiertes Rohr angeschweißt. Dieses Verfahren ist sehr aufwendig, bedingt eine sichtbare Schweißnaht an der Anschlußstelle mit der durch Materialoxidation erhöhten Gefahr von Undichtheiten oder sogar eines Ablösens der Muffe an der Schweißstelle und gibt, da auch die im Spritzgußverfahren hergestellte Muffe bei entsprechendem Material z. B. unter der Sonneneinstrahlung dem Schwinden ausgesetzt sein kann, keine ausreichende Sicherheit. Gleiche Nachteile hat ein anderes bekanntes Verfahren, bei dem in einer eigenen Maschine am Ende eines Rohres mittels einer Spritzgußvorrichtung Muffen aufgespritzt werden. Hier ergibt sich ein noch größerer technischer Aufwand mit teuren Maschinen und Rohr und Muffe stellen keinen homogenen Körper dar.

Der Schrumpfvorgang bei bestimmten Kunststoffen insbesondere Polyolefinen läßt sich wie folgt erklären:

Polyolefine besitzen einen kristalline Struktur und kommen nur in zwei Aggregatszuständen, nämlich dem festen und flüssigen Zustand vor. Bei einer Erwärmung des Kunststoffes bleibt ein Teil der ursprünglichen Moleküle fest, wogegen der andere Teil sich verflüssigkt, so daß insgesamt gesehen ein plastisch verformbarer Körper vorliegt, der geformt und verformt werden kann. Die nicht verflüssigten, also festbleibenden Moleküle bedingen den sogenannten Memory-Effekt, nämlich das Bestreben eines aus einem Rohling hergestellten Formteiles in die Ausgangsform zurückzukehren, sobald die vorher verflüssigten Moleküle, die den Formteil in der jetzigen Form halten, durch Erwärmung oder durch Langzeitkriechwirkung die entsprechende Rückverformung zulassen. Selbstverständlich spielen bei dem Memory-Effekt auch Menge und Beschaffenheit allfälliger Füllstoffe eine Rolle. Der Memory-Effekt kommt auch bei im Extrudierverfahren hergestellten Rohren und in besonders ausgeprägtem Maß bei durch Aufweiten hergestellten Endmuffen zur Wirkung und kann als Hauptgrund für das Schrumpfen von Rohren und Endmuffen angesehen werden. Die gleichen Ursachen haben Schwunderscheinungen bei anderen Kunststoffteilen aus den genannten Materialien.

Zum Stand der Technik wäre noch zu erwähnen, daß es aus der JP-54-006 079 A bekannt ist, dadurch Einschnürungen in Rohren zur Erleichterung der Herstellung einer Kupplung zu erzeugen, daß der einzuschnürende Rohrteil auf der einen Hälfte erwärmt und mit dieser auf Verformungstemperatur gebrachten Hälfte in eine einen kleineren Durchmesser bestimmende Form eingepreßt, dann abgekühlt und herausgenommen und schließlich an der gegenüberliegenden Hälfte unter Wiederholung dieser Verfahrensschritte ebenfalls verformt wird.

Aus der DE 36 03 060 A1 ist die Herstellung von Einschnürungen an Kunststoffschläuchen im Bereich von Kupplungsstellen in der Weise bekannt, daß nach Einführen eines abgestuften Verankerungsteiles der entsprechende Schlauchteil mit einem Schrumpfschlauch überzogen und dann die Gesamtanordnung über die Verformungstemperatur des Schlauches und die Schrumpftemperatur des Schrumpfschlauches erhitzt wird, so daß der Schrumpfschlauch beim Zusammenziehen das entsprechende Schlauchstück bis zur Anlage am Verankerungsteil verformt.

Aus der EP 0 195 591 A ist es bekannt, die Formstabilität von Kunststoffrohren dadurch zu erhöhen, daß diese auf einen gekühlten Dorn aufgesteckt und innerhalb einer Außenform über die Verformungstemperatur erwärmt und durch Druckmittelzufuhr bis zur Anlage an der Außenform aufgeweitet werden. Anschließend läßt man die Rohre wieder bis zur Anlage am gekühlten Dorn durch Abkühlung schrumpfen, wobei durch den gekühlten Dorn der Innendurchmesser des Rohres genau definiert sein soll. Das Vefahren ist äußerst aufwendig, setzt entsprechend große Anlagen voraus und kann trotzdem den Memory-Effekt aus den vorstehend angegebenen Gründen nicht ganz beseitigen.

Ein ähnliches Verfahren ist aus JP-62-211 125 A bekannt, wobei der einzige Unterschied darin besteht, daß der durch den gekühlten Dorn bestimmte End durchmesser kleiner als der Ausgangsdurchmesser des Rohres gewählt wird.

Schließlich ist es aus der WO 85/03251 A bekannt, innerhalb eines Rohres verschiedene Durchmesser dadurch zu erzeugen, daß ein Rohrrohling auf die Verformungstemperatur erwärmt und in einen kleineren oder größeren Durchmesser umgeformt wird. Dann wird ein Abschnitt dieses umgeformten Rohres noch einmal über den Kristallschmelzpunkt des Kunststoffmaterials erwärmt, so daß dieser Abschnitt aufgrund des Memory-Effektes den ursprünglichen Durchmesser wieder einnimmt. Auf diese Weise lassen sich Rohre mit verschiedenem Durchmesser und auch verschiedene Wandstärken ein und desselben Rohres erreichen. Der bei der zweiten Verformung ausgenützte Memory-Effekt bewirkt hier allerdings, daß auch der nicht der zweiten Verformung unterliegende Teil des Rohres sich im Lauf der Zeit aus den vorstehend genannten Gründen verformen wird.

Aufgabe der Erfindung ist es, ein einfaches Verfahren anzugeben, durch das unerwünschte Abweichungen der Endmasse fertiggestellter Kunststofformteile von den Sollmaßen, insbesondere langzeitlich auftretende Verformungen, verhindert werden. Eine Teilaufgabe besteht darin, das Verfahren für die Herstellung formhaltiger Kunststoffrohre und, was besonders interessant ist, für die Herstellung aufgeweiteter Endmuffen an Rohren anwendbar zu machen.

Die gestellte Hauptaufgabe wird durch die im Anspruch 1 angegebenen Verfahrensschritte gelöst.

Durch diese einfache Maßnahme wird die gestellte Hauptaufgabe zufriedenstellend gelöst. Dabei ist selbstverständlich eine jeweilige Anpassung der einzelnen Verfahrensschritte an das Material und die Verarbeitungsbedingungen notwendig. Diese Verarbeitungsbedingungen sind unter anderem die Verarbeitungstemperatur, welche die Menge der verbleibenden, den Memory-Effekt erzeugenden Moleküle bestimmt, die Materialart und auch die Materialstärke, z. B. die Wandstärke bei Rohren. Ferner muß darauf geachtet werden, daß bei dem Preßvorgang zwar eine Zusammendrückung des jeweiligen Formlings stattfindet, aber keine Risse oder Brüche im Material entstehen. Da Kunststoffteile üblicherweise Massenprodukte sind, lasssen sich die jeweiligen Arbeitsbedingungen mit einigen wenigen Versuchen für jeden Formling genau festlegen.

Grundsätzlich wird durch das erfindungsgemäße Verfahren erreicht, daß im fertiggestellten Formteil nicht mehr nur zwei verschiedene Arten von Kunststoffmolekülen, sondern drei Arten vorhanden sind, nämlich Moleküle, die sich aufgrund des Memory-Effekts an die Ursprungsform des Formteiles erinnern, Moleküle die bei der Formgebung flüssig waren und sich daher nach der Warmendverformung an die größeren Abmessungen des Formteiles erinnern und schließlich Moleküle, die sich an die beim Preßvorgang erzeugte kleinste Form des Formlings erinnern, wobei beim Preßvorgang eine Verformung unter das gewünschte Sollmaß stattfindet. Durch den Kräfteausgleich zwischen den drei genannten Molekülgruppen wird erreicht, daß der Formling maßhaltig die gewünschte Endform einnimmt.

Eine Anwendung des allgemeinen Verfahrens bei der Herstellung von Kunststoffrohren ist in Anspruch 2 angegeben.

In der Preßstation können intermittierend angetriebene Preßbacken oder auch Walzen mit je eine Rohrhälfte aufnehmenden Ringrillen eingesetzt werden. Bei größeren Rohrdurchmessern wird man gegebenenfalls nicht zwei je eine Halbschale bildende Preßbacken, sondern drei oder mehrere einem entsprechenden Bruchteil des Rohrumfanges zugeordnete Preßbacken einsetzen.

Die Anwendung des Verfahrens bei der Herstellung von Endmuffen an Kunststoffrohren ist Gegenstand des Anspruches 3.

### Ausführungsbeispiel:

### Herstellung einer Endmuffe an einem Polyethylenrohr mit 2 mm Wandstärke und 125 mm Außendurchmesser

Das Rohrende wird auf eine Temperatur von 120° C erwärmt und anschließend mit einem Aufmuffdorn auf einen Außendurchmesser von 131 mm aufgeweitet. Nach der Abkühlung wird der Aufmuffdorn entfernt und die Muffe wird zwischen zwei schalenförmigen Preßbacken die einen Rohrdurchmesser von 123 mm bestimmen, zusammengedrückt. Nach der Freigabe durch die Preßbacken besitzt die Muffe einen Durchmesser von 126 mm. Dieser Durchmesser bleibt bis zu einer Temperatur von 90° C stabil erhalten.

Wie bereits vorstehend erwähnt wurde, ist das erfindungsgemäße Verfahren nicht nur bei Muffen und extrudierten Rohren, sondern auch bei anderen ohne Behandlung dem Schwund unterliegenden Formteilen aus Kunststoff anwendbar, die in einem Spritzguß-, Extrudier-, Preß- oder sonstigem Verformgungsvorgang aus warmen Material hergestellt wurden, wobei jeweils Form und Dimsionierung des Preßwerkzeuges an den Formteil anzupassen sind.

## Patentansprüche

1. Verfahren zum Herstellen von Formteilen aus im warmen Zustand formbaren Kunststoffen, insbesondere Polyolefinen, wie Polyethylen und Polypropylen, bei dem das Kunststoffmaterial auf bzw. über seine eine bleibende Verformung zulassende Verformungstemperatur erwärmt, in diesem Zustand zu dem Formteil geformt und anschließend unter diese Verformungstemperatur abgekühlt wird, dadurch gekennzeichnet, daß die Formteile im wenigstens auf die Verformungstemperatur erwärmten Zustand zu ein geringes Übermaß gegenüber den gewünschten Endmaßen aufweisenden Zwischenprodukten geformt und erst nach der Abkühlung unter die Verformungstemperatur in einem materialverdichtenden Preßvorgang auf die gewünschten Endabmessungen gebracht werden.

2. Anwendung des Verfahrens nach Anspruch 1 bei der Herstellung von Kunststoffrohren mit der Maßgabe, daß die z.B. als Extrudierstation ausgebildete formgebende Station für das über die Verformungstemperatur erwärmte Material auf einen materialabhängig 0,5 bis 5 % über dem gewünschten Enddurchmesser des Rohres liegenden Rohrdurchmesser ausgelegt wird und die in ihr hergestellten, das Zwischenprodukt darstellenden Rohre nach der Abkühlung in einer Preßstation in einem Durchlaufverfahren kurzzeitig auf einen wieder materialabhängig um 0,5 bis 5 % kleineren Durchmesser als der gewünschte Enddurchmesser zusammengepreßt werden, so daß sie nach dem Preßvorgang den gewünschten Enddurchmesser aufweisen.

3. Anwendung des Verfahrens nach Anspruch 1 bei der Herstellung von Endmuffen an Kunststoffrohren, dadurch gekennzeichnet, daß das Rohrende wenigstens auf die Verformungstemperatur erwärmt und in diesem Zustand auf einen Durchmesser aufgemufft wird, der materialabhängig 0,5 bis 5 % größer ist als der gewünschte Enddurchmesser und daß die so gebildete, das Zwischenprodukt darstellende Muffe nach der Abkühlung kurzfristig bis unter den gewünschten Enddurchmesser zusammengedrückt wird, so daß sie nach der Freigabe durch das Preßwerkzeug als Endprodukt maßhaltig den gewünschten Enddurchmesser aufweist.

## Claims

1. A process for the production of mouldings from hot-mouldable plastics, more particularly polyolefins, such as polyethylene and polypropylene, wherein the plastic material is heated to or above its deformation temperature which permits permanent deformation, is shaped into the moulding in that state, and then cooled below this deformation temperature, characterised in that the mouldings in the state in which they are heated at least to the deformation temperature are shaped into intermediate products which have a slight oversize compared with the required final dimensions, and are not brought to the required final dimensions in a material-compressing pressing operation until after cooling below the deformation temperature.

2. Use of the process according to claim 1 in the production of plastic pipes or tubes, wherein the shaping station which is, for example, constructed as an extrusion station, for the material heated above the deformation temperature is designed for a tube or pipe diameter which, depending upon the material, is 0.5 to 5% above the required final diameter, and after cooling the tubes or pipes made therein and constituting the intermediate product are briefly compressed in a pressing station in a continuous process to a diameter which is again 0.5 to 5% smaller than the required final diameter, depending upon the material, so that they have the required final diameter after the pressing operation.

3. Use of the process according to claim 1 in the production of end sleeves on plastic tubes or pipes, characterised in that the tube or pipe end is heated at least to the deformation temperature and in this condition is expanded to a diameter which, depending upon the material, is 0.5 to 5% larger than the required final diameter and after cooling the sleeve thus formed and constituting the intermediate product is briefly compressed to below the required final diameter so that after release by the pressing tool the final product has the required final diameter true to size.

## Revendications

1. Procédé de fabrication de pièces moulées en matières plastiques moulables à l'état chaud, en particulier en polyoléfines, telles que le polyéthylène et le polypropylène, dans lequel la matière plastique est chauffée à une température égale ou supérieure à sa température de déformation permettant d'obtenir une déformation permanente, est moulée à cet état en donnant une pièce moulée puis est refroidie à une température inférieure à cette température de déformation, caractérisé en ce que les pièces moulées sont moulées en donnant des produits intermédiaires, présentant, au moins à l'état chauffé à la température de déformation, un léger excès dimensionnel par rapport aux dimensions finales souhaitées et, ensuite, après refroidissement au-dessous de la température de déformation, elles sont amenées aux dimensions finales souhaitées, en suivant un processus de pressage comprimant le matériau.

2. Application du procédé selon la revendication 1, pour la fabrication de tubes en matières plastiques, à la condition que le poste de façonnage, réalisé par exemple sous forme de poste d'extrusion, soit conçu pour le matériau chauffé à une température supérieure à la déformation, en donnant un diamètre de tube situé, en fonction du matériau, à une valeur de 0,5 à 5 % au-dessus du diamètre final souhaité du tube et les tubes constituant le produit intermédiaire fabriqué dans ce poste étant, après refroidissement, comprimés brièvement, dans un poste de pressage, dans un processus en continu, pour obtenir un diamètre qui, de nouveau en fonction du matériau, est de 0,5 à 5 % inférieur au diamètre final souhaité, si bien qu'il présente le diamètre final souhaité après déroulement du processus de pressage.

3. Application du procédé selon la revendication 1, dans la fabrication de manchons d'extrémité sur des tubes en matière plastique, caractérisée en ce que l'extrémité de tube est chauffée au moins à la température de déformation et est façonnée en manchon dans cet état, a un diamètre qui, en fonction du matériau, est de 0,5 à 5 % supérieur au diamètre final souhaité, et en ce que le manchon, ainsi formé et constituant le produit intermédiaire, est comprimé après refroidissement, brièvement, jusqu'à un diamètre inférieur au diamètre final souhaité de manière que, après libération de l'outil de pressage, il présente dimensionnellement, à titre de produit final, le diamètre final souhaité.
